Europäisches Patentamt

(19) European Patent Office  (11) Publication number: **0 301 612**
Office européen des brevets  **B1**

(12) **EUROPEAN PATENT SPECIFICATION**

(45) Date of publication of the patent specification:  (51) Int. Cl.⁵: **B60N 3/02**
01.08.90

(21) Application number: **88201297.4**

(22) Date of filing: **23.06.88**

(54) Assist handle provided with a coat hook, for automobiles.

(30) Priority: **23.07.87 IT 2206787 U**

(43) Date of publication of application:
**01.02.89 Bulletin 89/5**

(45) Publication of the grant of the patent:
**01.08.90 Bulletin 90/31**

(84) Designated Contracting States:
**DE ES FR GB**

(56) References cited:
**DE-A- 3 245 927**
**DE-A- 3 513 293**
**FR-A- 2 451 840**
**GB-A- 995 319**
**GB-A- 1 278 748**
**US-A- 3 521 571**
**US-A- 4 502 181**

(73) Proprietor: **ALFA LANCIA S.p.A., Viale Alfa Romeo,
I-20020 Arese, Milan(IT)**

(72) Inventor: **Villa, Ezio, Via Martiri della Libertà 2,
I-20020 Arese Milan(IT)**
Inventor: **Joppolo, Mario, Via Pozzo 25, I-21047 Saronno
Varese(IT)**

(74) Representative: **De Carli, Erberto et al, ING. BARZANO'
& ZANARDO MILANO S.p.A. Via Borgonuovo, 10,
I-20121 Milano(IT)**

## Description

This invention relates to an automobile assist handle which is mounted in the passenger compartment within the longitudinal member of the automobile roof, above the doors.

Assist handles mounted in the longitudinal roof members of automobiles are used by the occupants, especially the passengers, to oppose the action of the longitudinal and transverse inertia forces to which they are subjected during acceleration, deceleration and on bends, and to minimise the movements which result.

In most automobiles, the assist handles are in the form of arched straps fixed into the longitudinal roof members, whereas in some automobiles they are in the form of rotatable handles supported in said longitudinal members and at least partly sunk into their lining, these handles being rotatable from their upwardly pointing rest position to their downwardly pointing utilisation position. In some cases, assist handles, especially those of the first type, are provided with coat hooks which are either suspended from support rings mounted on the handles or are formed from projections provided in the handles. In other cases, especially with assist handles of the second type, the coat hooks are fixed to the longitudinal member to the side of the handles themselves. In all cases, the coat hooks are exposed to view and make the passenger compartment trim system less pleasing and elegant. As they possibly represent jutting elements, they are hardly acceptable from the safety aspect in the case of accidents.

The object of the present invention is to provide an assist handle which incorporates coat hooks in an arrangement by which they are easily usable but are hidden from view.

The invention represents an improvement in an assist handle provided with at least one coat hook, said handle being characterised by being rotatably supported in a longitudinal member of the roof of said automobile, and incorporating said at least one coat hook in that of its walls which faces said longitudinal member.

In a preferred embodiment, the handle is rotatably supported in the roof longitudinal member, the handgrip substantially facing downwards and being partly sunk into the lining of said longitudinal member. It also incorporates two coat hooks in proximity to its longitudinal ends.

With this embodiment, the coat hook or hooks are disposed between the handle and longitudinal member, and remain hidden by said handle whether this latter is not being used or being used. There is therefore the advantage of heightening safety within the passenger compartment and of aesthetically improving the passenger compartment itself, while preserving functionality and ease of use of the assist handle and coat hook or hooks, as it is necessary only to tilt the handle slightly away from the longitudinal member, whether for gripping it or for using the hooks.

Characteristics and advantages of the invention are illustrated hereinafter with reference to the accompanying Figures 1 to 5, which show a preferred embodiment of the invention by way of non-limiting example.

Figure 1 is a partial view of the interior of an automobile passenger compartment provided with assist handles constructed in accordance with the invention;

Figure 2 is an enlarged partial section on the line II-II of Figure 3;

Figure 3 is an enlarged partial section on the line III-III of Figure 2;

Figure 4 is a rear view of one of the handles of Figure 1; and

Figure 5 is a section on the line V-V of Figure 4.

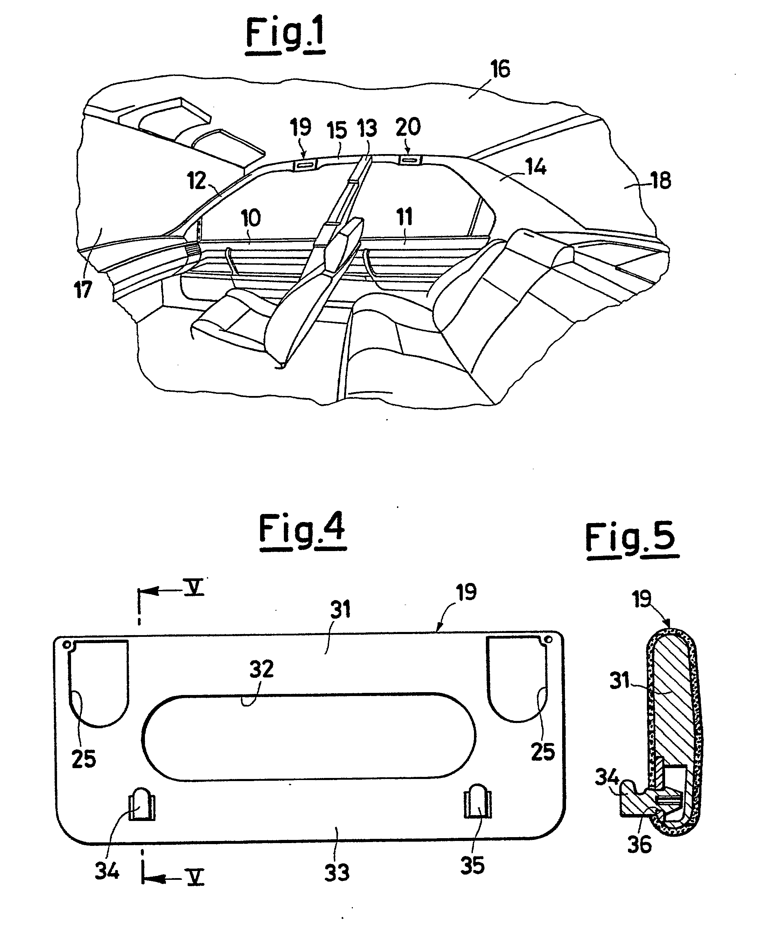

Figure 1 shows part of an automobile passenger compartment, in particular the front and rear doors 10 and 11, front, central and rear uprights 12, 13, 14, a longitudinal member 15 of the roof 16, a windscreen 17 and a rear window 18.

Assist handles indicated overall by 19 and 20 are mounted above the doors, in the longitudinal member 15 of the roof 16.

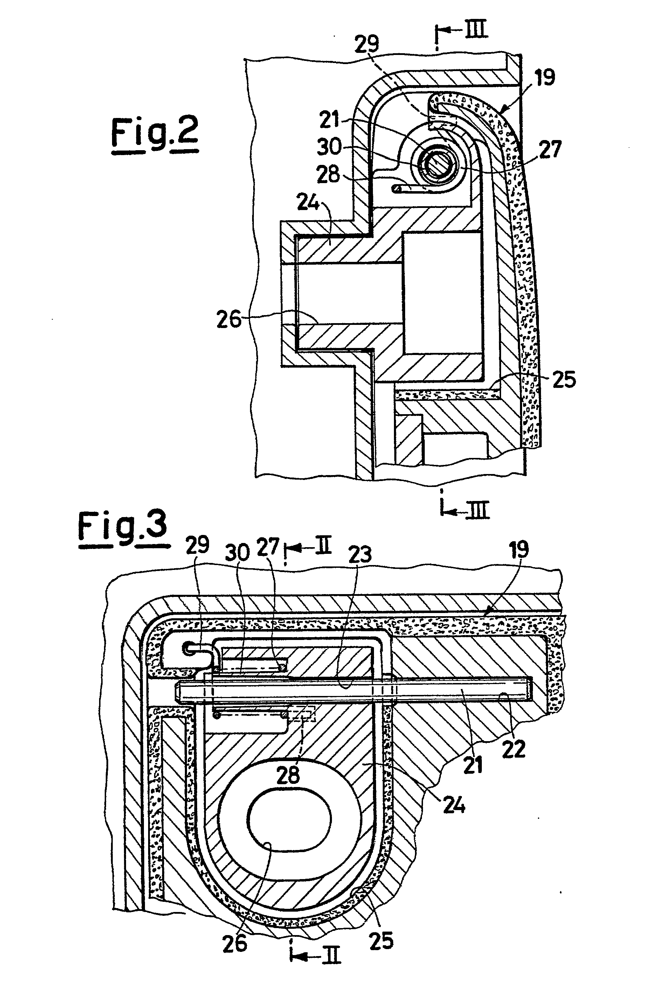

Each handle 19, 20 is rotatably supported in the longitudinal member 15 by two end pivots, such as that indicated by 21 and shown in Figures 2 and 3.

Each pivot 21 is fixed at 22 to the body of its handle, for example 19, and is rotatably supported at 23 in a base, such as 24, which is positioned within a cavity 25 in said handle and is fixed to the sheet metal of the longitudinal member 15 by a screw, not shown, passing through a hole 26.

The reference numeral 27 indicates a wire spring having its ends 28 and 29 fixed to the base 24 and to the body of the handle 19 respectively.

The spring 27 is supported by a bush 30, which is formed integrally with the base 24 and is coaxial to the pivot 21.

As can be seen from Figure 4, the handle 19 is in the form of a substantially rectangular flap 31 provided with a central aperture 32, so as to provide a handgrip 33 which can be gripped by an automobile occupant.

Two coat hooks 34 and 35 are press-fitted into relative seats 36 in the rear wall, facing the longitudinal member, of the handle 19 in proximity to its longitudinal ends, as shown in Figures 4 and 5.

The handle 19 is rotatably supported in the longitudinal member 15, with the grip 33 facing downwards and partly outwards, and sunk into the lining of the longitudinal member 15. In this manner, the coat hooks 34 and 35 are positioned between the handle 19, 20 and the longitudinal member 15, and remain hidden by said handle whether this is not being used or being used.

To use the handles 19 and 20 for assistance, or to use the hooks 34 and 35 as coat hooks, it is necessary only to tilt said handles slightly away from the longitudinal member 15.

The proposed embodiment is therefore interesting from an aesthetic viewpoint as the coat hooks remain masked by the handle, and it is also effective from a functional viewpoint because said hooks do not hinder the use of the handle as an assist handle, being positioned at its ends, and because it enables a pair of hooks to be fitted to each handle.

Moreover, the fact that the hooks 34 and 35 are positioned behind the handle is advantageous in terms of safety in the case of an accident.

## Claims

1. An assist handle provided with at least one coat hook, particularly for an automobile, characterised by being rotatably supported (21, 23) in a longitudinal member (15) of the roof of said automobile, and incorporating said at least one coat hook (34, 35) in that of its walls which faces said longitudinal member.

2. An assist handle as claimed in claim 1, characterised by being rotatably supported (21, 23) in said roof longitudinal member, with the handgrip substantially faced downwards and being partly sunk into the lining of said longitudinal member.

3. An assist handle as claimed in claim 1, characterised by incorporating two coat hooks (34,35) in proximity to its longitudinal ends.

## Patentansprüche

1. Haltegriff, der mit wenigstens einem Mantelhaken versehen ist, insbesondere für ein Kraftfahrzeug, dadurch gekennzeichnet, daß er in einem Längsträger (15) des Daches des Kraftfahrzeuges drehbar gehalten (21, 23) ist und in jener seiner Wände, die dem Längsträger zugewendet ist, den wenigstens einen Haken (34, 35) aufweist.

2. Haltegriff nach Anspruch 1, dadurch gekennzeichnet, daß er in dem Dachlängsträger drehbar gehalten (21, 23) ist, wobei der Handgriff im wesentlichen abwärts gerichtet ist und teilweise in der Verkleidung des Längsträgers versenkt ist.

3. Haltegriff nach Anspruch 1, dadurch gekennzeichnet, daß nahe bei seinen Längsenden zwei Mantelhaken (34, 35) vorgesehen sind.

## Revendications

1. Poignée de maintien comportant au moins une patère, notamment pour une automobile, caractérisée en ce qu'elle est supportée (21, 23), de manière à pouvoir tourner, dans un élément longitudinal (15) du toit de ladite automobile, et en ce que ladite au moins une patère (34, 35) est incorporée dans celle de ses parois, qui fait face audit élément longitudinal.

2. Poignée de maintien selon la revendication 1, caractérisée en ce qu'elle est supportée (21, 23) de manière à pouvoir tourner dans ledit élément longitudinal de toit, l'élément de préhension étant dirigé sensiblement vers le bas et étant partiellement en renfoncement dans la garniture dudit élément longitudinal.

3. Poignée de maintien selon la revendication 1, caractérisée en ce qu'elle comporte deux patères (34, 35) à proximité de ses extrémités longitudinales.

## Fig.1

16

19 15 13 20

12

14

18

10 11

17

## Fig.4

V

31 19

32

25 25

34 35

34 V 33 35

## Fig.5

19

31

34

36

Fig.2

Fig.3